# EUROPÄISCHE PATENTSCHRIFT

(11) **EP 0 754 898 B1**
(45) Veröffentlichungstag und Bekanntmachung des Hinweises auf die Patenterteilung: **13.05.1998**
(21) Anmeldenummer: 96111534.2
(22) Anmeldetag: 17.07.1996
(51) Int. Cl.: F16L 11/11, F16L 11/08, B32B 27/08, B32B 1/08

(54) **Kühlflüssigkeitsleitung**
Coolant hose
Tuyau pour liquide de refroidissement

(30) Priorität: 18.07.1995 DE 29511606 U
(43) Veröffentlichungstag der Anmeldung: 22.01.1997
(73) Patentinhaber: EMS-INVENTA AG, 8002 Zürich (CH)
(72) Erfinder: Pfleger, Wolfgang, Dipl.-Ing., 7015 Tamins (CH); Stoeppelmann, Georg, Dr.rer.nat., 7402 Bonaduz (CH)
(74) Vertreter: Müller-Boré & Partner Patentanwälte

(56) Entgegenhaltungen:
- EP-A- 0 654 505
- EP-A- 0 659 535
- DE-A- 4 434 530
- DE-C- 4 214 383
- US-A- 4 905 735
- PATENT ABSTRACTS OF JAPAN vol. 014, no. 276 (M-0984), 14.Juni 1990 & JP-A-02 080881 (HITACHI CABLE LTD), 20.März 1990,
- PATENT ABSTRACTS OF JAPAN vol. 013, no. 236 (C-602), 30.Mai 1989 & JP-A-01 043550 (JAPAN SYNTHETIC RUBBER CO LTD), 15.Februar 1989,
- PATENT ABSTRACTS OF JAPAN vol. 014, no. 159 (M-0956), 28.März 1990 & JP-A-02 022050 (TOKAI RUBBER IND LTD), 24.Januar 1990,

## Beschreibung

Die Erfindung betrifft den in den Ansprüchen angegebenen Gegenstand.

Die Erfindung betrifft insbesondere eine Kühlflüssigkeitsleitung zum Transport von Kühlmedien, die eine besondere Stabilität gegenüber den anwendungsbedingten Umwelteinflüssen aufweist. Kühlmedien, die die vorgenannten Leitungen durchfließen, können z.B. Frostschutzmittel aus Ethylenglykol, Diethylenglykol oder Propylenglykol und Wasser enthalten.

Solche Kühlflüssigkeitsleitungen können eine zylindrische Mantelfläche aufweisen und / oder wenigstens in Teilbereichen gewellt sein.

Die erfindungsgemäßen Kühlflüssigkeitsleitungen finden Verwendung im gesamten Kühlsystem von Automobilen, d.h. für Kühlleitungen, Heizleitungen sowie für Entlüftungsleitungen.

Thermoplastische Kühlflüssigkeitsleitungen sind schon aus den Dokumenten DE-A-4000434, DE-GM 9402180.5, DE- GM 9319879.5, DE-GM 9319880.9 und DE-A-4432584.3 bekannt.

So wird in der DE-A-4000434 eine flexible Kühlflüssigkeitsleitung beschrieben, die zweischichtig ausgebildet ist, wobei die Innenschicht ein mit funktionellen Gruppen versehenes Polyolefin ist und die Aussenschicht aus Polyamid aus der Gruppe der Homo- oder Copolyamide oder deren Blends besteht. Kühlflüssigkeitsleitungen dieser Ausformung haben den Nachteil, dass herkömmlich polymerisierte Polyamide eine mäßige Hydrolysebeständigl<eit aufweisen. Ferner bewirken die hohen Spannungen in druckbeaufschlagten Kühlflüssigkeitsleitungen, die als Thermoplastwellrohr ausgelegt sind, dass die gemäss DE-A-4000434 verwendeten gepfropften Polyolefine bei Kontakt mit Frostschutzmittel und bei Temperaturen grösser 100 °C sehr stark zu Spannungsrissen neigen und daher in der Anwendung versagen.

Ferner ist es für die Innenschicht von thermoplastischen Kühlflüssigkeitsleitungen sehr wichtig, dass die Kühlmittel- und Wasserpermeation möglichst gering ist, da diese Flüssigkeiten die berstdruckbeständige Aussenschicht schädigen. Hydrophile Polyolefine erfüllen diese Anforderung nur bedingt.

Ein weiterer Nachteil von Kühlflüssigkeitsleitungen gemäss DE P 4000434 besteht darin, dass die interlaminare Haftung zwischen Polyamid und Polyolefinen, die mit funktionellen Gruppen gepfropft sind, nach längerem Durchströmen mit Kühlmitteln bei hohen Temperaturen verloren geht und sodann eine Delamination erfolgt.

Der Erfindung liegt daher die Aufgabe zugrunde, eine druckbeaufschlagbare Kühlflüssigkeitsleitung zu entwickeln, die die obengenannten Nachteile des Standes der Technik vermeidet.

Diese Aufgabe wird durch die Kühlflüssigkeitsleitung gemäss Anspruch 1 gelöst.

In den Unteransprüchen sind vorteilhafte Ausführungsformen der Erfindungenthalten.

Durch die Entwicklung neuer Materialien werden erfindungsgemäß untenstehend beschriebene überraschende Vorteile gegenüber Wellrohren nach dem Stand der Technik: DE-GM 9319190.1, DE-GM 9319879.5 und DE-GM 9402180.5 erzielt.

Polyamide mit einem hohen Anteil an Aminoendgruppen weisen eine besonders gute Hydrolysestabilität auf. Durch diese Eigenschaft kann die Lebensdauer der erfindungsgemässen Rohre gegenüber Kühlflüssigkeitsleitung des Standes der Technik deutlich verbessert werden.

Vernetztes Polyethylen weist eine aussergewöhnlich hohe Spannungsrissbeständigkeit gegenüber aggressiven Säuren, wie auch gegenüber Laugen auf. Darüber hinaus wirkt Polyethylen mit hoher Dichte (HDPE) als ausgezeichnete Wasserbarriere, so dass die berstdruckbeständige Polyamidaussenschicht gut vor der zerstörenden Wirkung von Wasser geschützt wird. Die Verwendung von handelsüblichem unvernetzten HDPE ist jedoch nicht möglich, da Kühlflüssigkeitsleitungen mit Temperaturen jenseits des Kristallitschmelzpunktes beaufschlagt werden müssen und unvernetztes HDPE daher bei diesen Temperaturen schmilzt. Vernetzbares HDPE weist diesen Nachteil nicht auf. Aus verarbeitungstechnischen Gründen ist ein silanvernetztes PE anderen Systemen wie peroxid-, oder strahlenvernetzten PE vorzuziehen.

Polyamide mit Aminoendgruppenüberschuss weisen eine deutlich bessere und beständigere Haftung zu Polyolefinen mit funktionellen Seitengruppen, wie etwa Maleinsäureanhydrid, auf. Diese Haftung wird auch bei dauerndem Angriff durch Hitze und Wasser nicht gelöst.

Die erfindungsgemäßen Kühlflüssigkeitsleitungen finden Verwendung im gesamten Kühlsystem von Automobilen, d.h. für Kühlleitungen, Heizleitungen sowie für Entlüftungsleitungen. Je nach Einsatzort und Aufgabe können die Durchmesser der erfindungsgemäßen Leitungen variieren. Beispielsweise können die Leitungen Durchmesser im Bereich von 5 mm bis 50 mm Innendurchmesser aufweisen.

Eine ganz bevorzugte Ausführungsform der erfindungsgemässen Kühlflüssigkeitsleitung besteht aus einem Polyamid 12 mit Aminoendgruppenüberschuss als Aussenschicht, einem mit Organosilan gepfropften und durch Aufnahme von Wasser reduziertem HDPE als Innenschicht, und einer kompatiblen Zwischenschicht aus einem mit Maleinsäureanhydrid gepfropftem HDPE. Diese bevorzugte erfindungsgemässe Form umfasst Teilabschnitte, die gewellt ausgeformt sind und Teilabschnitte, die glatt, d.h. nicht gewellt ausgebildet sind.

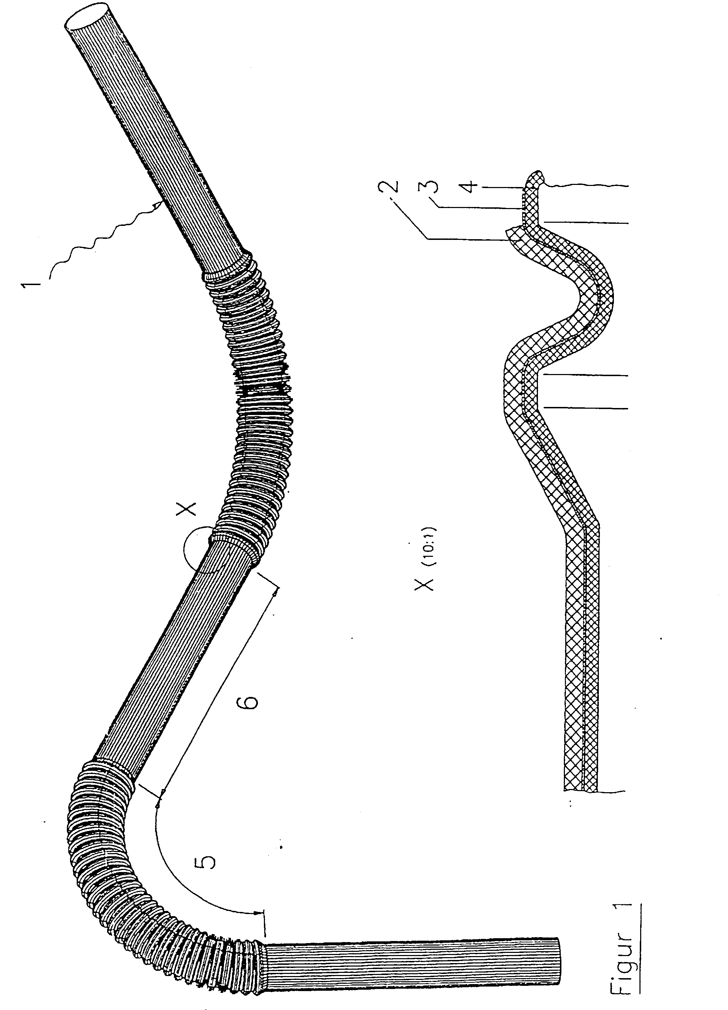

Figur 1 zeigt einen Teil einer bevorzugten erfindungsgemässen Kühlflüssigkeitsleitung 1, wobei die Aussenschicht (2), die Mittelschicht (3), und die Innenschicht (4) koaxial angeordnet sind. (5) bezeichnet den flexiblen Bereich, (6) den ungewellten, starren Bereich der Kühlflüssigkeitsleitung.

Die Aussenschicht (2) besteht aus einem Polyamid 12 (Grilamid L22A der EMS Chemie AG, 7013 Domat/Ems) mit einer relativen Lösungsviskosität von 2,1 in einer 0,5 % igen Lösung in m-Kresol und einem Carboxyl- zu Aminogruppenverhältnis von etwa 0,3.

Die Innenschicht (4) besteht aus einem HDPE mit der Dichte 0,95 g/cm³, gepfropft mit Methoxysilan.
Die Mittelschicht besteht aus einem HDPE, Dichte 0,96 g/cm³, gepfropft mit Maleinsäureanhydrid.

Tabelle 1 zeigt die Beständigkeit der erfindungsgemässen, besonders bevorzugten Kühlflüssigkeitsleitung gemäss Figur 1 im Vergleich zum Stand der Technik. Dabei wurden die Thermoplastwellrohre mit einem Frostschutzmittel der Fa. Peugeot Procor 3000 in einer 50/50 Mischung mit Wasser gefüllt, verschlossen und anschliessend mit einer konstanten Temperatur von 118 °C und einem konstanten Überdruck von 1,6 bar gelagert.

In Tabelle 1 bedeuten:
Rohr 1: Erfindungsgemäßes Rohr gemäss Figur 1
Rohr 2: wie Rohr 1, aber PA12 (Grilamid L25H) mit relativer Lösungsviskosität 2,3 und einem Carboxyl- zu Aminoendgruppenverhältnis von etwa 1,0
Rohr 3:
Aussen: Grilamid L25H mit relativer Lösungsviskosität 2,3 und einem Carboxyl- zu Aminoendgruppenverhältnis von etwa 1,0
Mitte: mit 5 Gew.-% Maleinsäureanhydrid gepfropftes PP
Innen: PP/EPDM Blend
Rohr 4:
Aussen: Grilamid L25H mit relativer Lösungsviskosität 2,3 und einem Carboxyl- zu Aminoendgruppenverhältnis von etwa 1,0
Innen: mit 5 Gew.-% Maleinsäureanhydrid gepfropftes PP

**Tabelle 1**

| Eigenschaft | Lagerdauer(h) | Rohr 1 (Erfindung) | Rohr 2 | Rohr 3 | Rohr 4 ∗∗ |
|---|---|---|---|---|---|
| η ᵣₑₗ in 0,5 % m-Kresol gemessen an der Aussenschicht | 0 | 2,28 | 2,30 | 2,30 | 2,30 |
| η ᵣₑₗ in m-Kresol gemessen an der Aussenschicht | 1000 | 2,34 | 2,21 | 1,92 | 1,75 |
| η ᵣₑₗ in m-Kresol gemessen an der Aussenschicht | 2000 | 2,03 | 1,85 | ∗ | ∗ |
| Schlagzähigkeit des Rohres gemäss Renault-Norm (-30 °C, 400 g-Gewicht aus einer Höhe von 500 mm | 0 | ohne Bruch | ohne Bruch | ohne Bruch | ohne Bruch |
| Schlagzähigkeit des Rohres gemäss Renault-Norm (-30 °C, 400 g-Gewicht aus einer Höhe von 500 mm | 1000 | ohne Bruch | ohne Bruch | Bruch | Bruch |
| Schlagzähigkeit des Rohres gemäss Renault-Norm (-30 °C, 400 g-Gewicht aus einer Höhe von 500 mm | 2000 | ohne Bruch | Bruch | ∗ | ∗ |
| Haftung zwischen Aussen- und Mittelschicht | 0 | nicht ablösbar | nicht ablösbar | nicht ablösbar | nicht ablösbar |
| Haftung zwischen Aussen- und Innenschicht | 1000 | nicht ablösbar | ablösbar | ablösbar | ablösbar |
| Haftung zwischen Aussen- und Mittelschicht | 2000 | nicht ablösbar | ablösbar | ∗ | ∗ |

| | | | | | |
|---|---|---|---|---|---|
| ∗ = Versuch abgebrochen nach 1000 Stunden wegen Versagen des Rohres | | | | | |
| ∗∗ = Rohr 4 entspricht dem Stand der Technik nach DE-A-40 00 434 | | | | | |

Die erfindungsgemässe Polymerleitung ist durch Coextrusion eines Polymerrohres und gegebenenfalls anschliessender Ausbildung der Wellungen durch Blasoder Saugformen herstellbar. Alternativ ist die erfindungsgemässe Kühlflüssigkeitsleitung durch Coextrusionsblasformen herstellbar. Wellrohre und Wellschläuche sind in der Praxis in verschiedenen Ausführungsformen bekannt. Sie können aus Metall oder aus Kunststoff bestehen. Solche Rohre und Schläuche finden u.a. in der Automobilindustrie Verwendung.

Diese Verfahren sind Stand der Technik und werden u.a. auch in DE-GM 9319190 und DE-GM 9319879 beschrieben.

Die erfindungsgemässe druckbeaufschlagbare Kühlflüssigkeitsleitung besteht aus drei Polymerschichten mit insbesondere an den Berührungsflächen der Schichten miteinander verträglichen Polymeren, wobei die Leitung in einem Teilstück gewellt sein kann. Die erfindungsgemässe Polymerleitung weist eine hohe Flexibilität, Hydrolyse- und Berstdruckbeständigkeit auf.

Die Polymeren der einzelnen Schichten können mit verarbeitungs- oder verwendungsbedingten Additiven nach dem Stand der Technik modifiziert sein. Dafür seien im speziellen Stabilisatoren, Weichmacher, Pigmente und Zusätze zur Schlagzähigkeits-Verbesserung genannt.

Die Schichtdicken der einzelnen Schichten der erfindungsgemässen Ausführungsformen können an die Anforderungen etwa in Bezug auf Barrierewirkung, Berstdruckbeständigkeit oder Schlagzähigkeit angepasst werden und variieren zwischen 0,05 mm und 3 mm.

## Patentansprüche

1. Dreischichtige, flexible Kühlflüssigkeitsleitung mit hoher Hydrolyse- und Berstdruckfestigkeit, dadurch gekennzeichnet, daß die Aussenschicht aus Polyamid, insbesondere Polyamid 12, mit Aminoendgruppenüberschuss, die Innenschicht aus vernetztem Polyethylen und die Zwischenschicht aus einem zur Aussen- und Innenschicht kompatiblen Material besteht.

2. Kühlflüssigkeitsleitung gemäss Anspruch 1, bei der die Innenschicht aus HDPE besteht, das mit Organosilanen, insbesondere mit Methoxysilan, gepfropft ist.

3. Kühlflüssigkeitsleitung gemäss Anspruch 1, bei der die Aussenschicht aus Homo- oder Copolyamiden oder deren Blends besteht, die einen Aminogruppenüberschuss aufweisen.

4. Kühlflüssigkeitsleitung gemäss einem der Ansprüche 1 bis 3, bei der zwischen Innen- und Aussenschicht eine Zwischenschicht angeordnet ist, bestehend aus einem mit funktionellen Gruppen versehenen, mit den benachbarten Schichten verträglichen Polyethylen.

5. Kühlflüssigkeitsleitung gemäß einem der vorhergehenden Ansprüche, dadurch gekennzeichnet, daß die Aussenschicht aus Polyamid 12 mit Aminoendgruppenüberschuß, die Innenschicht aus einem mit Organosilan gepfropften HDPE und die Zwischenschicht aus einem mit Maleinsäureanhydrid gepfropften HDPE besteht.

6. Kühlflüssigkeitsleitung gemäß einem der vorhergehenden Ansprüche, dadurch gekennzeichnet, daß die Schichtdicken der einzelnen Schichten zwischen 0,05 und 3 mm betragen.

7. Kühlflüssigkeitsleitung gemäß einem der vorhergehenden Ansprüche, dadurch gekennzeichnet, daß sie als glattes Rohr oder wenigstens in Teilbereichen gewellt ausgeformt ist.

8. Kühlflüssigkeitsleitung gemäß einem der vorhergehenden Ansprüche 1 bis 7, dadurch gekennzeichnet, daß sie durch Coextrusion eines Polymerrohres und gegebenenfalls anschliessender Ausbildung der Wellungen durch Blas- oder Saugformen oder durch Coextrusions-Blasformen herstellbar ist.

## Claims

1. Three-layer, flexible coolant hose having high resistance to hydrolysis and high bursting strength, characterized in that the outer layer is composed of polyamide, in particular nylon-12, having an excess of amino end groups, the inner layer is composed of crosslinked polyethylene, and the intermediate layer is composed of a material compatible with the outer and inner layers.

2. Coolant hose in accordance with Claim 1, in which the inner layer is composed of HDPE which is grafted with organosilanes, in particular with methoxysilanes.

3. Coolant hose in accordance with Claim 1, in which the outer layer is composed of homo- or copolyamides or blends of these, which have an excess of amino groups.

4. Coolant hose in accordance with one of Claims 1 to 3, in which an intermediate layer is arranged between inner and outer layer and is composed of a polyethylene which is compatible with the adjacent layers and is provided with functional groups.

5. Coolant hose in accordance with one of the preceding claims, characterized in that the outer layer is composed of nylon-12 having an excess of amino end groups, the inner layer is composed of an HDPE grafted with organosilane, and the intermediate layer is composed of an HDPE grafted with maleic anhydride.

6. Coolant hose in accordance with one of the preceding claims, characterized in that the thicknesses of the individual layers are from 0.05 to 3 mm.

7. Coolant hose in accordance with one of the preceding claims, characterized in that it is shaped as a smooth pipe or has corrugations at least in some areas.

8. Coolant hose in accordance with one of the preceding Claims 1 to 7, characterized in that it can be produced by coextrusion of a tube of polymer, followed, if desired, by shaping of the corrugations by blow moulding or suction moulding or by coextrusion blow moulding.

## Revendications

1. Tuyau flexible à trois couches pour liquide de refroidissement, de grande résistance à l'hydrolyse et à la pression d'éclatement, caractérisé en ce que la couche externe consiste en polyamide, notamment en polyamide 12, avec un excès de groupes amino terminaux, la couche interne consiste en polyéthylène réticulé et la couche intermédiaire consiste en un matériau compatible avec les couches externe et interne.

2. Tuyau pour liquide de refroidissement suivant la revendication 1, dans lequel la couche interne consiste en PEHD qui est greffé avec des organosilanes, notamment avec du méthoxysilane.

3. Tuyau pour liquide de refroidissement suivant la revendication 1, dans lequel la couche externe consiste en homopolyamides ou en copolyamides ou en mélanges de ces polyamides qui présentent un excès de groupes amino.

4. Tuyau pour liquide de refroidissement suivant l'une des revendications 1 à 3, dans lequel est disposée entre la couche interne et la couche externe une couche intermédiaire constituée d'un polyéthylène porteur de groupes fonctionnels, compatibles avec les couches adjacentes.

5. Tuyau pour liquide de refroidissement suivant l'une des revendications précédentes, caractérisé en ce que la couche externe consiste en polyamide 12 portant un excès de groupes amino terminaux, la couche interne consiste en PEHD greffé avec un organosilane et la couche intermédiaire consiste en PEHD greffé avec un anhydride d'acide maléique.

6. Tuyau pour liquide de refroidissement suivant l'une des revendications précédentes, caractérisé en ce que les épaisseurs des couches individuelles ont des valeurs comprises entre 0,05 et 3 mm.

7. Tuyau pour liquide de refroidissement suivant l'une des revendications précédentes, caractérisé en ce qu'il est réalisé comme un tube lisse ou présentant au moins localement des ondulations.

8. Tuyau pour liquide de refroidissement suivant l'une des revendication 1 à 7, caractérisé en ce qu'il peut être fabriqué par coextrusion d'un tube en polymère, suivie le cas échéant de la formation des ondulations par soufflage ou succion sur matrice, ou par coextrusion et soufflage sur matrice.
